# DEMANDE DE BREVET EUROPEEN

(11) **EP 4 755 768 A1**
(43) Date de publication de la demande: **10.06.2026**
(21) Numéro de dépôt: 25220728.7
(22) Date de dépôt: 04.12.2025
(51) Int. Cl.: B62D 35/00

(54) **ACCESSOIRE DE RÉDUCTION DE TRAINÉE POUR VÉHICULE ET VÉHICULE LONG**

(30) Priorité: 06.12.2024 FR 2413591
(71) Demandeur: EASE-LAB, 06400 Cannes (FR)
(72) Inventeur: HERPIN, Pierre, 06400 CANNES (FR); BELLIA, Ivan, 06400 CANNES (FR)
(74) Mandataire: Fédit-Loriot

(57) **Abrégé**

L'invention concerne un accessoire (1) de réduction de trainée pour véhicule (2) comprenant :
- une poche (100) souple déployable profilée pour réduire la trainée du véhicule,
- une structure de fixation (400) de la poche à une extrémité arrière du véhicule, comportant au moins une ouverture (410) d'admission passive d'un flux d'air (F2) vers l'intérieur de la poche, de sorte à déployer la poche depuis une configuration repliée vers une configuration déployée et à maintenir la poche déployée.

Selon l'invention, l'ouverture forme une fente située à l'arrière du véhicule, la structure de fixation comprend une surface de guidage du flux d'air s'étendant de manière convexe depuis le bord avant (411) de la fente vers l'intérieur de la poche.

## Description

La présente invention concerne, de manière générale, le domaine des véhicules et plus particulièrement des véhicules à remorque.

L'invention concerne plus particulièrement un accessoire de réduction de trainée pour véhicule selon le préambule de la revendication 1.

L'invention trouve une application particulièrement avantageuse pour améliorer l'aérodynamisme des véhicules longs, notamment des véhicules à remorque.

On entend par le terme « remorque » un volume de transport important situé à l'arrière d'une partie de traction du véhicule, par exemple un volume de transport de marchandises de forme parallélépipédique tel qu'une semi-remorque rapportée sur un tracteur ou encore une caravane accrochée à un véhicule quelconque. Le terme « véhicule long » regroupe les poids lourds et camions mais également les véhicules de transport en commun de voyageur comme des cars ou des bus, ou encore les camping-cars. Ce terme inclut aussi les trains, par exemple les trains de marchandises transportant des conteneurs.

On connaît déjà du document US2013/076068 un accessoire tel que précité qui permet de réduire la trainée (parfois dite « de culot ») à l'arrière d'un véhicule, plus particulièrement d'un camion. La forme profilée de la poche, dans sa configuration déployée, permet aux flux d'air générés par la mise en mouvement du véhicule et glissant le long des parois latérales du véhicule de continuer à s'écouler de façon laminaire le long de la poche, ce qui diminue les turbulences de culot et réduit ainsi la trainée. Afin que des flux d'air suffisants pour déployer la poche traversent les ouvertures d'admission, ces dernières sont positionnées en saillie des parois latérales du véhicule, dans le sens où elles sont situées en amont d'une paroi d'extrémité arrière du véhicule et où elles présentent une section frontale transverse à la direction d'avancée du véhicule. La fixation de l'accessoire se fait elle aussi au niveau des parois latérales du véhicule.

Selon cet agencement, l'accessoire augmente donc le maître-couple du véhicule, c'est-à-dire la section transversale du véhicule, en particulier au niveau de l'extrémité arrière. Cela présente deux inconvénients majeurs. D'une part, du point de vue aérodynamique, l'augmentation du maître-couple du véhicule, accroît la prise au vent du véhicule et limite donc l'avantage apporté par l'accessoire. D'autre part, du point de vue de la sécurité routière, il est déconseillé, voire interdit, de mettre en œuvre des accessoires augmentant la section transversale du véhicule.

Afin de remédier aux inconvénients de l'accessoire connu précité, la présente invention propose un accessoire positionnable intégralement à l'arrière du véhicule, c'est-à-dire sans augmenter le maître-couple du véhicule. Autrement dit, l'accessoire est longitudinalement positionnable dans le prolongement du volume hors-tout du véhicule.

Plus particulièrement, selon l'invention, il est proposé un accessoire de réduction de trainée pour véhicule tel que défini dans la revendication 1.

Grâce à la fente positionnée en aval de l'extrémité arrière du véhicule, c'est-à-dire derrière le véhicule, l'accessoire peut être monté sur le véhicule de telle sorte qu'il n'augmente pas la section transversale de ce dernier au niveau de l'extrémité arrière. Autrement dit, il ne dépasse alors pas latéralement (ni vers le haut) de l'extrémité arrière.

De manière remarquable, la surface de guidage du flux d'air assure alors un déploiement efficace de la poche malgré le positionnement spécifique de la fente. En effet, la surface de guidage permet de tirer profit de la viscosité de l'air qui va permettre au flux d'air (s'écoulant le long d'une paroi latérale du véhicule) de suivre le profil courbé de la surface de guidage grâce au phénomène de couche limite. La surface de guidage invite ainsi le flux d'air vers l'intérieur de la poche, sans pour cela que la fente ne présente une surface transverse au flux d'air, et donc sans changer le maître-couple du véhicule. Grâce à la surface de guidage, le flux d'air peut donc s'engouffrer dans la poche via la fente et mettre la poche en pression pour la déployer.

L'accessoire selon l'invention, dans sa configuration déployée, permet une réduction supérieure ou égale à 8% du SCx du véhicule, c'est-à-dire de son coefficient de trainée multiplié par sa surface frontale. En conséquence, l'accessoire selon l'invention permet une baisse de plus de 8% de la consommation d'énergie nécessaire à déplacer le véhicule.

D'autres caractéristiques de l'accessoire conforme à l'invention sont précisées dans les revendications 2 à 12.

L'invention propose également un véhicule long dont l'extrémité arrière est équipée d'un accessoire de réduction de trainée tel que précité.

La description qui va suivre en regard des dessins annexés, donnés à titre d'exemples non limitatifs, fera bien comprendre en quoi consiste l'invention et comment elle peut être réalisée.

Sur les dessins annexés :
La figure 1 est une vue schématique en perspective d'un véhicule long conforme à l'invention équipé d'un accessoire de réduction de trainée selon l'invention dans lequel la poche souple de l'accessoire est dans sa configuration repliée ;
La figure 2 est une vue schématique en perspective d'une partie arrière du véhicule de la figure 1 dans lequel la poche souple de l'accessoire est dans sa configuration déployée ;
La figure 3 est une vue schématique en perspective d'une partie arrière du véhicule de la figure 1 dans lequel l'accessoire est pivoté pour permettre l'ouverture de la porte arrière du véhicule ;
La figure 4 est une vue schématique éclatée en perspective de l'accessoire de réduction de trainée de la figure 1 dans sa configuration déployée ; et
La figure 5 est une vue similaire à celle de la figure 2 avec un arraché partiel de l'accessoire de réduction de trainée.

Dans la description qui va suivre, par convention, les termes « avant / devant » et « arrière / derrière » seront employés par référence au véhicule, l'avant correspondant à la cabine ou partie de pilotage du véhicule tandis que l'arrière correspond à la partie d'extrémité du véhicule opposé à la partie de pilotage. Les termes « haut » et « bas » seront employés par référence à la direction verticale du véhicule en position d'utilisation. Le terme « latéral » sera employé par référence aux côtés gauche et droit du véhicule par opposition au terme « central » qui sera employé par référence à une orientation vers le milieu du véhicule.

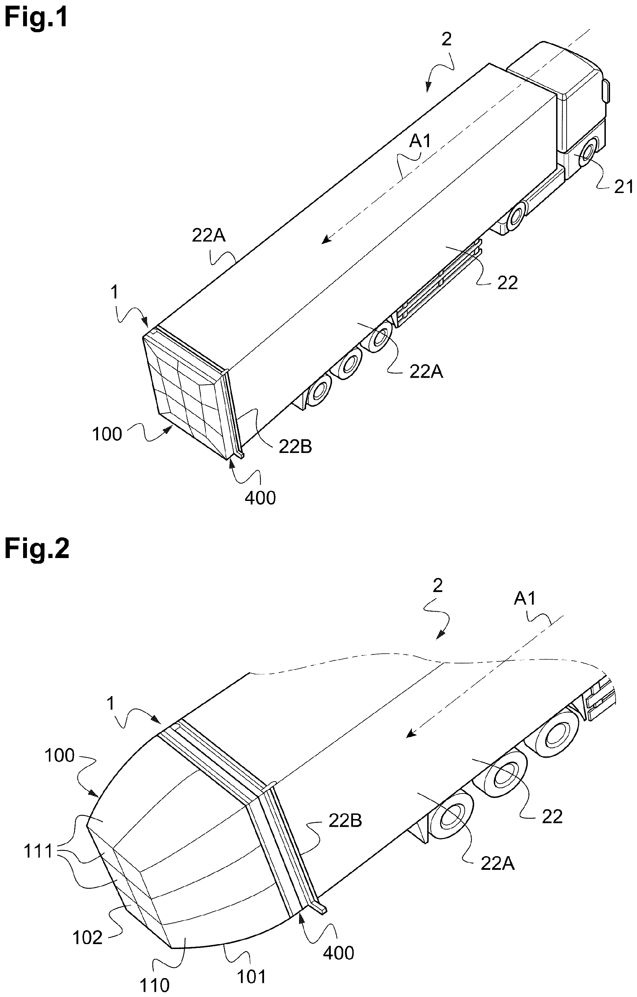

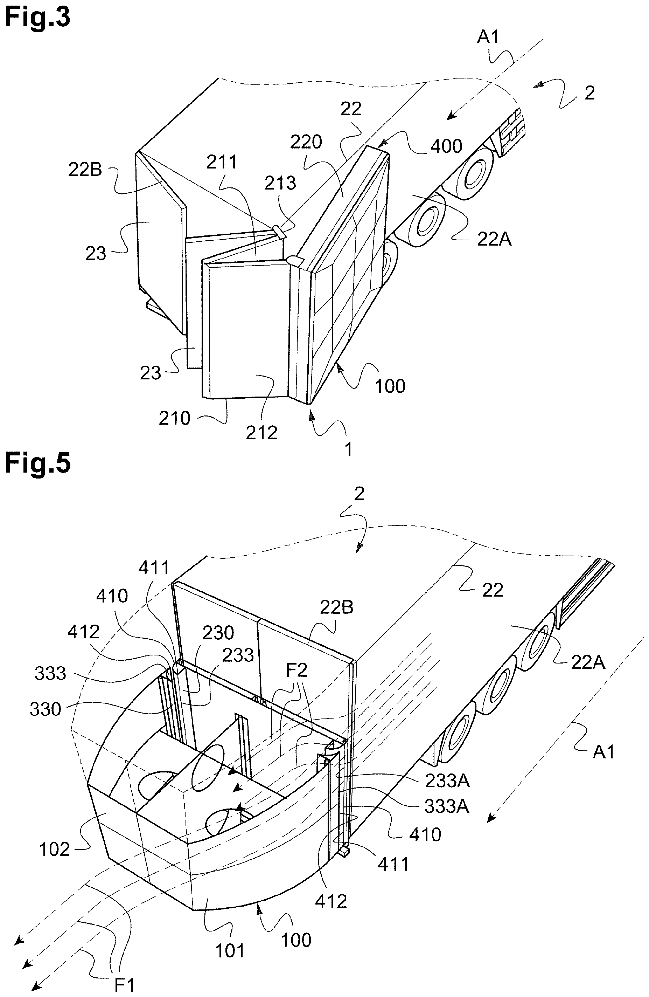

Sur les figures 1 à 5, on a représenté un accessoire de réduction de trainée 1 conforme à l'invention, appelé ci-après l'accessoire 1. L'accessoire 1 est conçu pour être monté sur un véhicule, typiquement un véhicule automobile long comprenant un volume arrière important, par exemple de forme parallélépipédique, pour le transport de marchandises ou de personnes. Tel que représenté sur les figures, l'accessoire 1 est ici monté sur un véhicule 2 articulé comprenant un tracteur 21 et une remorque 22 de forme globalement parallélépipédique rectangle attelée au tracteur 21 (figure 1). La remorque 22 définit de façon générale un volume de transport arrière du véhicule 2 qui peut être intégral avec le reste du véhicule ou rapporté sur celui-ci. Comme le montre bien la figure 1, dans le mode de réalisation de l'invention décrit, la remorque 22 comporte une paroi supérieure longitudinale, deux parois latérales longitudinales 22A parallèles qui s'étendent le long de la paroi supérieure longitudinale, et deux parois d'extrémité parallèles dont une paroi d'extrémité arrière 22B. Ces cinq parois externes délimitent intérieurement un volume de chargement et extérieurement un volume d'encombrement hors-tout. Comme le montre la figure 3, la paroi d'extrémité arrière 22B comprend notamment une porte arrière 23 permettant l'ouverture de la remorque 22 pour accéder au volume de chargement.

L'accessoire 1 est conçu pour être monté à une extrémité arrière du véhicule 2. Dans l'exemple représenté sur les figures, l'accessoire 1 est conçu pour être monté sur la paroi d'extrémité arrière 22B de la remorque 22 du véhicule 2.

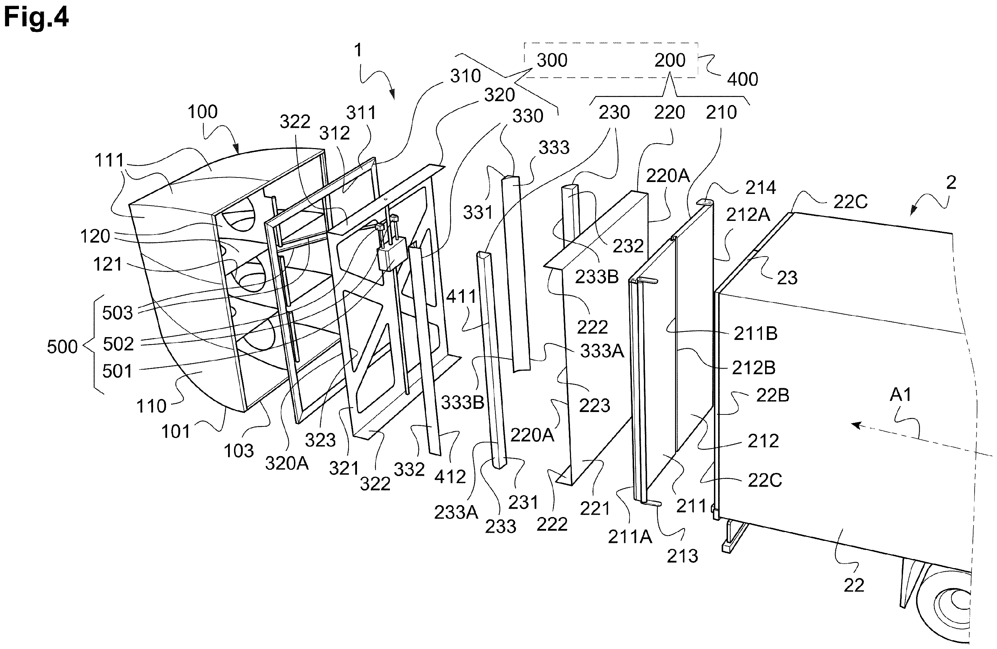

Comme le montre la figure 4, l'accessoire 1 comprend deux éléments principaux :
- une poche 100 ; et
- une structure de fixation 400 pour le rattachement de la poche 100 au véhicule 2.

La poche 100 est réalisée dans une matière souple afin de pouvoir être déployée depuis une configuration repliée (figure 1) vers une configuration déployée (figure 2), et, inversement, être rabattue depuis sa configuration déployée vers sa configuration repliée. La poche 100 forme ainsi une enveloppe escamotable.

Dans sa configuration repliée, la poche 100 est agencée pour occuper un espace restreint. Comme le montre la figure 1, elle présente alors une forme sensiblement plane qui augmente très peu la longueur du véhicule (la poche dépasse alors peu de l'arrière du véhicule). La poche 100 est typiquement placée dans sa configuration repliée pour garer le véhicule 2 ou ouvrir et fermer la porte arrière 23 de la remorque 22 du véhicule 2.

Dans sa configuration déployée, la poche 100 est profilée pour réduire la trainée du véhicule 2. La poche 100 forme alors un appendice s'étendant dans la continuité du volume hors-tout du véhicule 2 selon une direction avant-arrière A1 correspondant, sur l'exemple des figures, à une direction horizontale allant de l'avant vers l'arrière du véhicule 2 de façon sensiblement parallèle aux parois latérales longitudinales 22A de la remorque 22.

On entend par « profilé » le fait que, dans sa configuration déployée, une surface externe 101 de la poche 100 présente une forme tridimensionnelle spécifiquement conçue pour réduire les turbulences à l'arrière du véhicule 2 lorsque que ce dernier est en mouvement. En effet, comme décrit en introduction, des flux d'air générés par la mise en mouvement du véhicule 2 et glissant de façon laminaire le long de la remorque 22 (par exemple ceux référencés F1 sur la figure 5) glissent également de façon laminaire le long de la poche 100.

Comme le montre la figure 5, dans sa configuration déployée, la poche 100 présente ainsi une forme effilée s'affinant selon la direction avant-arrière A1. La poche 100 présente, transversalement à la direction avant-arrière A1, des dimensions qui diminuent selon la direction avant-arrière A1. Sur sa partie avant (c'est-à-dire au niveau de la paroi d'extrémité arrière du véhicule), la poche 100 présente des dimensions sensiblement égales à celles de la paroi d'extrémité arrière 22B de la remorque 22 du véhicule 2. Les dimensions de la poche 100 décroissent en direction de sa partie arrière jusqu'à une zone terminale 102 qui est ici sensiblement plane et rectangulaire (figures 2 et 5). Les sections transversales de la poche 100 sont rectangulaires, avec des hauteurs et des largeurs décroissantes vers l'arrière. La zone terminale 102 peut par exemple supporter des éléments de signalisation, des indications d'angles morts, des disques de limitation de vitesse, des bandes réfléchissantes, des catadioptres, ou des balisages.

De préférence, la poche 100 est réalisée dans une matière textile, ce qui lui confère une résistance et une flexibilité appropriées. Comme le montre la figure 4, elle présente une enveloppe externe 110 et des cloisons internes 120 de maintien de forme reliant différentes parties de l'enveloppe externe 110 entre-elles. L'enveloppe externe 110 est en creux et délimite ainsi un volume interne de la poche 100 (variable en fonction de la configuration de la poche), appelé ci-après l'intérieur de la poche. Les cloisons internes 120 forment un réseau, certaines cloisons internes 120 s'étendent verticalement tandis que d'autres s'étendent horizontalement. Comme le montrent les figures 2 et 4, l'enveloppe externe 110 comporte une pluralité de pans 111 cousus entre eux. Les cloisons internes 120 présentent quant à elles des trouées 121, ici au contour circulaire (figure 4), afin d'uniformiser la pression d'air à l'intérieur de la poche 100.

Selon la direction avant-arrière A1, la poche 100 présente une longueur qui est par exemple comprise entre 5 cm et 50 cm dans sa configuration repliée, et une longueur qui est par exemple comprise entre 50 cm et 500 cm dans sa configuration déployée.

Le passage de la poche 100 depuis sa configuration repliée vers sa configuration déployée repose sur la mise en mouvement du véhicule 2. Comme le montre bien la figure 5, l'accessoire 1 comporte à cet effet des ouvertures 410 d'admission passive de flux d'air en mouvement relatif par rapport au véhicule 2 depuis l'extérieur de la poche 100 vers l'intérieur de la poche 100. Le mouvement relatif du flux d'air résultant majoritairement de l'avancée du véhicule 2 (dans de l'air qui n'est pas nécessairement en mouvement). Ces flux d'air entrant (par exemple ceux référencés F2 sur la figure 5) mettent en pression l'intérieur de la poche 100 qui, au-delà d'un seuil de pression, se déploie. Le fait que l'admission d'air soit « passive » signifie que le flux d'air est admis dans la poche à travers les ouvertures 410 uniquement grâce à la vitesse relative du flux d'air par rapport au véhicule 2, par opposition à une admission d'air qui serait active utilisant par exemple des dispositifs alimentés par une source d'énergie, tels qu'un compresseur d'air, pour déployer la poche.

Ces ouvertures 410 sont plus spécifiquement prévues dans la structure de fixation 400. La structure de fixation 400 est décrite telle qu'installée à l'arrière du véhicule 2.

Comme le montre la figure 4, la structure de fixation 400 comprend :
- un châssis avant 200 conformé pour être monté sur la paroi d'extrémité arrière 22B de la remorque 22 du véhicule 2, et
- un châssis arrière 300 conformé pour être monté sur le châssis avant 200 et pour porter la poche 100.

De l'avant vers l'arrière, le châssis avant 200 comprend un panneau de montage 210 sur le véhicule 2, un plan support femelle 220 et deux profilés avant 230 latéraux.

Dans l'exemple représenté sur les figures 1 à 5, le panneau de montage 210 comporte un premier volet vertical 211 et un deuxième volet vertical 212 disposés côte à côte et de dimensions rectangulaires sensiblement égales.

Le premier volet vertical 211 est monté en pivotement, autour d'un axe vertical, le long d'un bord latéral 22C de la paroi d'extrémité arrière 22B de la remorque 22 du véhicule 2 (figure 4). Le premier volet vertical 211 est pour cela équipé d'une fourche articulée 213 de la structure de fixation 400 qui permet la fixation du premier volet vertical 211 sur ladite paroi d'extrémité arrière 22B. Cette fourche articulée 213 comprend une tige verticale agencée le long d'un bord latéral 211A du premier volet vertical 211 et deux dents enserrant l'extrémité arrière 22B de la remorque 22 en haut et en bas. Comme le montre la figure 3, cette articulation entre le panneau de montage 210 et le véhicule 2 permet de décaler l'accessoire 1 de la porte arrière 23 du véhicule 2 et ainsi d'ouvrir cette dernière.

Avantageusement, les deux volets verticaux 211, 212 sont également articulés l'un par rapport à l'autre le long de leur bord central 211B, 212B (à l'opposé de leurs bords latéraux 211A, 212A). Enfin, le deuxième volet vertical 212 est monté en pivotement, autour d'un axe vertical et au niveau de son bord latéral 212A, le long d'un bord latéral 220A du plan support femelle 220 au moyen d'une autre fourche 214. Comme le montre la figure 3, cette double articulation du panneau de montage 210, par rapport à lui-même et par rapport au plan support femelle 220, permet, une fois que l'accessoire 1 est décalé de la porte arrière 23, de ranger l'accessoire 1 le long de la paroi latérale longitudinale 22A de la remorque 22.

Bien entendu, lorsque l'accessoire 1 est en cours d'utilisation (c'est-à-dire lorsque le véhicule est en mouvement), le deuxième volet vertical 212 est solidarisé au véhicule 2 par des moyens de retenue (non représentés) pouvant être désengagés. De préférence, le deuxième volet vertical 212 est solidarisé au véhicule 2 le long du bord latéral 212A du deuxième volet vertical 212 et d'un bord latéral 22C de la paroi d'extrémité arrière 22B de la remorque 22 du véhicule 2. De même, le premier volet vertical 211 est solidarisé au plan support femelle 220 par des moyens de retenue (non représentés) pouvant être désengagés, de préférence le long du bord latéral 211A du premier volet vertical 211. Ainsi, l'accessoire 1 ne se décale pas de la paroi d'extrémité arrière 22B de la remorque 22 du véhicule 2 de façon incontrôlée.

Les autres éléments du châssis avant 200, à savoir le plan support femelle 220 et les deux profilés avant 230, sont rigides, par opposition au panneau de montage 210 qui est articulé.

Le plan support femelle 220 présente la forme d'une plaque repliée en haut et en bas. Le plan support femelle 220 comprend ainsi une partie centrale 221 plane, pleine et verticale, et deux retours 222 faisant saillie depuis la partie centrale 221, à environs 90 degrés de celle-ci, vers l'arrière. Les deux retours 222 forment ainsi des bandes horizontales.

Le plan support femelle 220 définit ainsi un logement en creux 223 dans lequel sont agencés les deux profilés avant 230 qui sont fixés au plan support femelle 220. Comme le montre bien la figure 4, les deux profilés avant 230 sont symétriques par rapport à un plan avant-arrière vertical P1, un seul profilé avant 230 est décrit par la suite.

Le profilé avant 230 est positionné le long d'un bord latéral 220A du plan support femelle 220. Comme le montre la figure 4, il présente la forme d'un tube vertical, s'étendant tout le long du plan support femelle 220, d'un de ses retours 222 à l'autre, et de section globalement triangulaire. Le profilé avant 230 comporte toutefois une face courbée. Il comporte ainsi trois faces, à savoir une première face 231 plane s'étendant le long de la partie centrale 221 du plan support femelle 220, une deuxième face 232 plane s'étendant selon la direction avant-arrière A1, et une troisième face 233 courbe reliant la première face 231 et la deuxième face 232.

La troisième face 233 du profilé avant 230 s'étend vers l'arrière de manière courbée depuis un bord latéral 233A du profilé avant 230 vers un bord central 233B du profilé avant 230. La troisième face 233 présente une courbure convexe. Autrement dit, la troisième face 233 est courbée autour d'un axe situé avant la troisième face 233 selon la direction avant-arrière A1. Comme le montrent les figures 4 et 5, la troisième face 233 est plus particulièrement tangente à la direction avant-arrière A1 au niveau du bord latéral 233A du profilé avant 230. Dans l'exemple représenté sur les figures, cela signifie que la troisième face 233 est tangente à la paroi latérale longitudinale 22A de la remorque 22 du véhicule 2 (figure 5).

Le rayon de courbure de cette troisième face 233 dépend de la vitesse du véhicule 2 à laquelle on souhaite que l'accessoire 1, lorsque la poche 100 est déployée, réduise au mieux la traînée du véhicule 2.

De l'arrière vers l'avant, le châssis arrière 300 comprend un cadre arrière 310 pour la fixation de la poche 100, un plan support mâle 320 et deux profilés arrière 330 latéraux.

Le cadre arrière 310 permet de relier la poche 100 au support de fixation 400. Le cadre arrière 310 présente un pourtour 311 rectangulaire relativement fin en comparaison de son évidement central 312. Pour le montage de la poche 100, le cadre arrière 310 comporte une rainure (non représentée) évasée s'étendant tout le long de son pourtour 311. Une bordure 103 de la poche 100 est glissée dans cette rainure au moyen d'un passepoil. La bordure 103 de la poche 100 et la rainure forment ainsi un assemblage à queue d'aronde dans lequel la bordure 103 de la poche 100 forme un tenon et la rainure du pourtour 311 du cadre arrière 310 forme une mortaise. La poche 100 est ainsi montée de façon amovible sur le cadre arrière 310 ce qui permet par exemple de facilement changer la poche 100 en cas d'usure de cette dernière.

Le cadre arrière 310 est fixé au plan support mâle 320.

Le plan support mâle 320 présente la forme d'une plaque repliée en haut et en bas. Le plan support mâle 320 comprend ainsi une partie centrale 321 plane, partiellement évidée et verticale, et deux retours 322 faisant saillie depuis la partie centrale 321, à environs 90 degrés de celle-ci, vers l'avant. Les deux retours 322 forment ainsi des bandes horizontales. Les évidements permettent le passage de moyens de rappel 500 de la poche 100 décrits ultérieurement.

Le plan support mâle 320 est conçu pour être monté sur le plan support femelle 220. Avantageusement, le plan support mâle 320 est plus particulièrement conçu pour être monté dans le plan support femelle 220 à une distance de montage réglable. En d'autres termes, le plan support mâle 320 peut être monté sur le plan support femelle 220 plus ou moins loin de ce dernier selon la direction avant-arrière A1. Ceci permet d'ajuster la position du châssis arrière 300 par rapport au châssis avant 200 selon la direction avant-arrière A1 et donc, comme cela apparaît par la suite, la taille des ouvertures 410.

Ce montage du plan support mâle 320 dans le plan support femelle 220 se fait au niveau de leurs retours 322, 222 respectifs.

Les retours 322 du plan support mâle 320 sont conformés pour s'emboîter, au jeu de montage près, entre les retours 222 du plan support femelle 220 (d'où leur nom respectif de plan support « mâle » et « femelle »). Chaque retour 322 du plan support mâle 320 s'étend au contact du retour 222 correspondant du plan support femelle 220. Les retours 322 du plan support mâle 320 et les retours 222 du plan support femelle 220 sont alors au contact les uns des autres sur une longueur, selon la direction avant-arrière A1, plus au moins grande en fonction de la distance de montage.

Pour solidariser le plan support mâle 320 au plan support femelle 220, les retours 322, 222 sont par exemples fixés les uns aux autres au moyen d'assemblages vis-écrous, les retours 322, 222 présentant plusieurs trous alignés selon la direction avant-arrière A1 pour choisir la distance de montage.

Le plan support mâle 320 définit ainsi un logement en creux 323 dans lequel sont agencés les deux profilés arrière 330 qui sont fixés au plan support mâle 320. Comme le montre bien la figure 4, les deux profilés arrière 330 sont symétriques par rapport au plan avant-arrière vertical P1, un seul profilé arrière 330 est décrit par la suite.

Comme le montre la figure 4, le profilé arrière 330 est positionné le long d'un bord latéral 320A du plan support mâle 320. Il présente la forme d'un tube vertical, s'étendant tout le long du plan support mâle 320, d'un de ses retours 322 à l'autre, et de section globalement triangulaire. Le profilé arrière 330 comporte toutefois une face courbe. Il comporte ainsi trois faces, à savoir une première face 331 plane s'étendant le long de la partie centrale 321 du plan support mâle 320, une deuxième face 332 plane s'étendant selon la direction avant-arrière A1, et une troisième face 333 courbe reliant la première face 331 et la deuxième face 332.

Ainsi, la troisième face 333 du profilé arrière 330 s'étend vers l'arrière de manière courbée depuis un bord latéral 333A du profilé arrière 330 vers un bord central 333B du profilé arrière 333C. La troisième face 333 présente une courbure concave. Autrement dit, la troisième face 333 est courbée autour d'un axe situé avant la troisième face 333 selon la direction avant-arrière A1.

Comme le montre la figure 5, le profilé arrière 330 est complémentaire du profilé avant 230 correspondant dans le sens où la troisième face 333 concave du profilé arrière 330 s'étend en regard de la troisième face 233 convexe dudit profilé avant 230. Tel que représenté sur les figures 4 et 5, le profilé avant 230 et le profilé arrière 330 s'étendent parallèlement et verticalement. On entend ici par « verticalement » le fait que les profilés 230, 330 s'étendent selon une direction formant un angle inférieur à 15 degrés avec la direction verticale.

Comme cela apparaît bien sur la figure 5, la structure de fixation 400 comporte ainsi deux ouvertures 410 d'admission passive de flux d'air depuis l'extérieur vers l'intérieur de la poche 100 formant chacune une fente 410, c'est-à-dire une ouverture étroite et longiligne. Comme le montre la figure 5, ces deux fentes 410 sont sensiblement verticales dans le sens où leur dimension selon la direction verticale, correspondant à leur hauteur, est beaucoup plus grande que leur dimension selon la direction avant-arrière A1, correspondant à leur largeur.

Chaque fente 410 est définie entre le profilé avant 230 et le profilé arrière 330 qui lui fait face. Chaque fente 410 est plus particulièrement délimitée, à l'avant, par le bord latéral 233A du profilé avant 230, qui définit alors un bord avant 411 de la fente 410, et, à l'arrière, par le bord latéral 333A du profilé arrière 330, qui définit alors un bord arrière 412 de la fente 410. Le bord avant 411 de chaque fente 410 est plus proche du véhicule 2 que le bord arrière 412 de la fente 410 selon la direction avant-arrière A1, il correspond ainsi au premier bord de la fente 410 qu'un flux d'air glissant sur une paroi latérale longitudinale 22A de la remorque 22 du véhicule 22 rencontre. Le bord avant 411 et le bord arrière 412 de chaque fente 410 sont parallèles. Chaque fente 410 est par ailleurs délimitée, en haut et en bas, par des bords des retours 222, 322 des plans support femelle et mâle 220, 320.

Pour chaque fente 410, la troisième face 233 convexe du profilé avant 230 forme alors une surface de guidage d'un flux d'air qui s'étend de manière convexe depuis le bord avant 411 de la fente 410 vers l'intérieur de la poche 100. La troisième face 333 concave du profilé arrière 330 forme quant à elle une surface complémentaire à la surface de guidage qui permet de réduire les turbulences au niveau de la fente 410. La surface de guidage et la surface complémentaire forment ainsi un conduit qui s'étend depuis la fente 410 et débouchent vers l'intérieur de la poche 100.

Comme le montre bien la figure 5, une partie de l'air s'écoulant le long des parois latérales longitudinales 22A de la remorque 22 du véhicule 2 s'engouffre dans les fentes 410. Ces flux d'air F2 correspondent globalement à la couche limite de l'air s'écoulant le long des parois latérales longitudinales 22A de la remorque 22 du véhicule 2, c'est-à-dire à l'air s'écoulant au plus proche desdites parois latérales longitudinales 22A. Ces flux d'air F2 présentent une certaine adhérence avec lesdites parois latérales longitudinales 22A et donc, par continuité, avec les surfaces de guidage. Les surfaces de guidage invitent ainsi ces flux d'air F2 vers l'intérieur de la poche 100 pour son déploiement et son maintien en configuration déployée. Une fois la poche 100 placée dans sa configuration déployée, les flux d'air F1 s'écoulant le long des parois latérales longitudinales 22A de la remorque 22 du véhicule 2 glissent alors par continuité sur la surface externe 101 de la poche 100. Ces flux d'air F2 correspondent notamment à l'air s'écoulant légèrement à distance desdites parois latérales longitudinales 22A, c'est-à-dire au-delà de la couche limite. L'écoulement de l'air est alors laminaire et les turbulences de culot fortement diminuées.

La distance entre le bord avant 411 et le bord arrière 412 de chaque fente 410, c'est-à-dire la largeur de la fente 410, est par exemple comprise entre 1 cm and 15 cm. Cette distance peut notamment être ajustée en modifiant la distance de montage précitée. Avantageusement, augmenter la largeur des fentes 410 permet de faire rentrer des flux d'air plus importants et donc de réduire une vitesse seuil du véhicule 2 à partir de laquelle la poche 100 se déploie. Inversement, réduire la largeur des fentes 410 augmente cette vitesse seuil du véhicule 2.

La longueur du bord avant 411 et du bord arrière 412 de chaque fente 410 selon la direction verticale, c'est-à-dire la hauteur de la fente 410, est supérieure à 50% de la hauteur de la paroi d'extrémité arrière 22B de la remorque 22 du véhicule 2. De préférence, la hauteur de la fente 410 est supérieure à 70% de la hauteur de la paroi d'extrémité arrière 22B de la remorque 22 du véhicule 2

De préférence, pour chaque fente 410, la distance entre la surface de guidage et la surface complémentaire, mesurée par exemple parallèlement à la direction avant-arrière A1, augmente depuis la fente 410 vers l'intérieur de la poche 100. En d'autres termes, la surface de guidage et la surface complémentaire forment un conduit évasé vers l'intérieur de la poche 100. Avantageusement, cela permet, par effet venturi, d'augmenter la pression à la sortie du canal (c'est-à-dire dans la poche 100) par rapport à l'entrée du conduit (c'est-à-dire au niveau de la fente 410). Cela facilite le déploiement de la poche 100. Pour cela, la courbure de la troisième face 333 du profilé arrière 330 est moins grande que la courbure de la troisième face 233 du profilé avant 230.

Comme le montre la figure 4, la structure de fixation 400 présente, transversalement à la direction avant-arrière A1, des dimensions inférieures ou égales à celles de la paroi d'extrémité arrière 22B de la remorque 22 du véhicule 2. Il en est de même pour la poche 100. Transversalement à la direction avant-arrière A1, les fentes 410 sont notamment situées dans l'encadrement de la paroi d'extrémité arrière 22B de la remorque 22 du véhicule 2. Ainsi, l'accessoire 1 n'augmente pas le maître-couple du véhicule 2.

Comme le montre la figure 4, l'accessoire 1 comprend aussi des moyens de rappel 500 prévus pour ramener automatiquement la poche 100 depuis sa configuration déployée (figure 2) vers sa configuration repliée (figure 1). Ces moyens de rappel 500 sont des moyens mécaniques comprenant un lest 501, des poulies 502 et des câbles 503. Les poulies 502 sont montées sur le plan support mâle 320 du châssis arrière 300 de la structure de fixation 400. Les câbles relient le lest 501 à la poche 100 et plus particulièrement à la zone terminale 102 de la poche 100. Entre les deux, les câbles 503 reposent sur les poulies 502 et passent au travers des évidements du plan support mâle 320.

Lorsque la poche 100 est dans sa configuration déployée et que la pression à l'intérieur de la poche 100 passe sous une pression seuil, le lest 501 descend verticalement sous l'effet de son poids, ce qui ramène l'extrémité arrière de la poche 100, c'est-à-dire la zone terminale 102 de la poche 100, vers la structure de fixation 400 et rabat donc la poche 100. La zone terminale 102 comprend par exemple des renforcements assurant sa rigidité, les câbles 503 étant alors fixés à ces renforcements.

En pratique, cette pression seuil correspond aussi à une vitesse seuil (non-nulle) des flux d'air en mouvement relatif autour du véhicule 2 en dessous de laquelle le poids du lest 501 devient supérieur à la force générée par la poche 100 sur les câbles 503. Par conséquent, puisque ces flux d'air sont principalement mis en mouvement relatif par rapport au véhicule 2 par l'avancée du véhicule 2, cette pression seuil correspond aussi à une vitesse seuil (non-nulle) du véhicule 2.

Réciproquement, grâce aux moyens de rappel 500, la poche 100 est maintenue en configuration repliée jusqu'à ce que la pression à l'intérieur de la poche 100 dépasse ladite pression seuil. En conséquence, en pratique, les moyens de rappel 500 maintiennent la poche 100 dans sa configuration repliée tant que le véhicule 2 n'atteint pas ladite vitesse seuil du véhicule 2.

Ainsi, il est prévu de pouvoir sélectionner ladite vitesse seuil du véhicule 2 au-delà de laquelle la poche est déployée et en dessous de laquelle la poche est repliée. Pour cela, il est par exemple possible d'ajuster la masse du lest 501 des moyens de rappel 500 et/ou la largeur des fentes 410 via la distance de montage. Ladite vitesse seuil du véhicule 2 est par exemple de 50 km/h. Ladite vitesse seuil du véhicule 2 est par exemple sélectionnée de sorte que la poche 100 ne se déploie que lorsque le véhicule 2 roule à grande vitesse, par exemple sur une autoroute.

L'invention n'est pas limitée au mode de réalisation décrit et représenté et l'on pourrait prévoir toute variante conforme aux revendications annexées.

En particulier, le nombre de fentes que comporte la structure de fixation peut être différent de deux. La structure de fixation peut par exemple comprendre deux fentes de chaque côté, la hauteur de chaque fente étant légèrement inférieure à la moitié de la hauteur de la paroi d'extrémité arrière du véhicule. La forme des fentes peut aussi varier, les bords avant et arrière peuvent par exemple ne pas être parallèles.

La structure de fixation ne comprend pas nécessairement deux châssis réglables l'un par rapport à l'autre mais peut comprendre un seul châssis. Les fentes ont alors une largeur fixe. La vitesse seuil du véhicule 2 pour le changement de configuration de la poche peut encore être ajustée via la masse du lest.

La structure de fixation peut aussi ne pas comprendre de profilés arrière ou comprendre des profilés arrière dépourvus de leur troisième face courbe. Bien que l'admission d'air soit moins efficace, notamment sans les surfaces complémentaires, les flux d'air sont toujours invités à entrer dans la poche par les surfaces de guidage.

L'accessoire peut aussi ne pas comprendre les moyens de rappel mécanique. Le repliement de la poche peut par exemple est assurer en réalisant les cloisons internes de la poche en matière élastique.

## Revendications

1. Accessoire (1) de réduction de trainée pour véhicule (2) comprenant :
- une poche (100) souple déployable depuis une configuration repliée vers une configuration déployée dans laquelle la poche (100) est profilée pour réduire la trainée du véhicule (2),
- une structure de fixation (400) de la poche (100) à une extrémité arrière du véhicule (2), la structure de fixation (400) comportant au moins une ouverture (410) d'admission passive d'un flux d'air (F2) en mouvement relatif par rapport au véhicule (2), depuis l'extérieur de la poche (100) vers l'intérieur de la poche (100), de sorte à déployer la poche (100) depuis sa configuration repliée vers sa configuration déployée et à maintenir la poche (100) dans sa configuration déployée,
**caractérisé en ce que** l'ouverture (410) forme une fente (410) située, selon une direction avant-arrière (A1) du véhicule (2), à l'arrière de l'extrémité arrière du véhicule (2), ladite fente (410) présentant un bord avant (411) et un bord arrière (412), le bord avant (411) étant plus proche du véhicule (2) que le bord arrière (412) selon ladite direction avant-arrière (A1), et
**en ce que** la structure de fixation (400) comprend une surface de guidage du flux d'air (F2), ladite surface de guidage s'étendant de manière convexe depuis le bord avant (411) de la fente (410) vers l'intérieur de la poche (100).

2. Accessoire (1) selon la revendication 1, dans lequel la surface de guidage s'étend sur toute la hauteur de la fente (410).

3. Accessoire (1) selon la revendication 1 ou 2, dans lequel, au niveau du bord avant (411) de la fente (410), la surface de guidage est tangente à une paroi latérale externe (22A) du véhicule (2).

4. Accessoire (1) selon l'une des revendications 1 à 3, dans lequel la structure de fixation (400) comprend une surface complémentaire concave s'étendant en vis-à-vis de la surface de guidage et depuis le bord arrière (412) de la fente (410) vers l'intérieur de la poche (100).

5. Accessoire (1) selon la revendication 4, dans lequel la distance entre la surface de guidage et la surface complémentaire augmente le long de la surface de guidage depuis la fente (410) vers l'intérieur de la poche (100).

6. Accessoire (1) selon l'une des revendications 1 à 5, dans lequel la structure de fixation (400) comprend un châssis avant (200) comprenant le bord avant (411) de la fente (410) et un châssis arrière (300) comprenant le bord arrière (412) de la fente (410), le châssis arrière (300) étant adapté à être monté sur le châssis avant (200) à une distance réglable du châssis avant (200) de sorte que la distance entre le bord avant (411) de la fente (410) et le bord arrière (412) de la fente (410) est ajustable.

7. Accessoire (1) selon la revendication 6, dans lequel une bordure de la poche (100) est fixée de manière amovible au châssis arrière (300) de la structure de fixation (400).

8. Accessoire (1) selon l'une des revendications 1 à 7, dans lequel la largeur de la fente (410) est comprise entre 1 cm and 15 cm et dans lequel la hauteur de la fente (410) est supérieure à 50% de la hauteur d'une paroi d'extrémité arrière (22C) du véhicule (2).

9. Accessoire (1) selon l'une des revendications 1 à 8, dans lequel la structure de fixation (400) présente, transversalement à la direction avant-arrière (A1) du véhicule (2), des dimensions inférieures ou égales à celles d'une paroi d'extrémité arrière (22C) du véhicule (2).

10. Accessoire (1) selon l'une des revendications 1 à 9, dans lequel la poche (100) comprend une enveloppe externe (110) et des cloisons internes (120) de maintien de forme reliant différentes parties de l'enveloppe externe (110) entre-elles.

11. Accessoire (1) selon l'une des revendications 1 à 10, comprenant des moyens de rappel mécaniques prévus (500) pour ramener automatiquement la poche (100) depuis sa configuration déployée vers sa configuration repliée lorsque la vitesse relative du flux d'air (F2), par rapport au véhicule (2), est inférieure à une valeur seuil non-nulle.

12. Accessoire (1) selon l'une des revendications 1 à 11, dans lequel la structure de fixation (400) est articulée pour autoriser l'ouverture (410) d'une porte arrière (23) du véhicule (2).

13. Véhicule (2) long dont l'extrémité arrière (22B) est équipée d'un accessoire de réduction de trainée selon l'une des revendications 1 à 12.
